# EUROPEAN PATENT SPECIFICATION

(11) **EP 3 422 179 B1**
(45) Date of publication and mention of the grant of the patent: **07.09.2022**
(21) Application number: 18184532.2
(22) Date of filing: 26.07.2012
(51) Int. Cl.: G06F 9/32, G06F 9/30, G06F 15/80

(54) **A COMPUTER ARCHITECTURE WITH A HARDWARE ACCUMULATOR RESET**
COMPUTERARCHITEKTUR MIT EINEM HARDWARE-AKKUMULATOR-RESET
ARCHITECTURE INFORMATIQUE AVEC RÉINITIALISATION MATÉRIELLE DE L'ACCUMULATEUR

(43) Date of publication of application: 02.01.2019
(62) Divisional of application: 12275113.4
(73) Proprietor: Mobileye Vision Technologies Ltd., Jerusalem 9777513 (IL)
(72) Inventor: Dogon, Gil Israel, Jerusalem, 9574692 (IL); Arbeli, Yosi, 7532020 Rishon Le-Zion (IL); Kreinin, Yosef, 93585 Jerusalem (IL)
(74) Representative: Williams Powell

(56) References cited:
- GB-A- 2 382 672
- GB-A- 2 464 292
- NIKOLAOS KAVVADIAS ET AL: "Elimination of Overhead Operations in Complex Loop Structures for Embedded Microprocessors", IEEE TRANSACTIONS ON COMPUTERS, IEEE SERVICE CENTER, LOS ALAMITOS, CA, US, vol. 56, no. 2, 1 February 2008 (2008-02-01), pages 200-214, XP011194980, ISSN: 0018-9340

## Description

### BACKGROUND

### 1. Technical Field

The present invention relates to computer architecture.

### 2. Description of Related Art

During the last few years camera based driver assistance systems (DAS) have been entering the market; including lane departure warning (LDW), Automatic High-beam Control (AHC), pedestrian recognition, and forward collision warning (FCW). These driver assistance systems may use real time image processing of multiple patches detected in multiple image frames captured from a camera mounted in a vehicle.

Reduced instruction set computing is a processor design strategy based on a simplified instruction set and may provide higher performance if the simplicity enables much faster execution per instruction. A processor architecture based on this strategy is known herein as a reduced instruction set computer (RISC).

A vector processor, or array processor, is a processor that implements an instruction set containing instructions that operate on one-dimensional arrays of data called vectors. A scalar processor in comparison operates on a single datum. Most commonly used processors are scalar processors.

VLIW (Very Long Instruction Word) digital signal processing units contain several sub-processing units which operate in parallel. The VLIW contains multiple op-codes which direct the various sub-processing units, thus allowing for parallel processing since each sub-unit gets its op-code at the same time. An op-code is a portion of a machine language instruction that specifies an operation to be performed.

GB 2382672 A discloses a processing unit comprising: an execution unit for executing an operation defined by an instruction on a pair of input values; a repeat control unit for causing said operation to be repeatedly executed on successive pairs of values, wherein each repeated execution generates an output value; wherein the instruction includes a repeat indicator, which indicates the number of times the operation is to be executed for that instruction and a condition, the repeat control unit being operable in response to said repeat indicator to determine the number of times the operation is executed by the execution unit, and to cease repeated execution on detection that the output value no longer satisfies said condition whether or not the operation has been executed said number of times.

### BRIEF SUMMARY

Thus, various embodiments of the present invention aim to reduce calculational overhead of image processing algorithms which may be used for instance in driver assistance systems.

According to an aspect of the present invention, there is provided a method performable by a processor as specified in claim 1.

According to another aspect of the present invention, there is provided a system as specified in claim 8.

Various methods are described, performable by a processor including an accumulator. Multiple events are generated by a hardware circuit. The hardware circuit may be an address generation unit (AGU) or a zero overhead loop circuit. An event is selected to produce one or more selected events. A reset signal to the accumulator is generated responsive to the selected event. Responsive to the reset signal, the accumulator is reset to zero or another initial value while avoiding breaking pipelined execution of the processor.

The events are stored in an event register. The selection of the selected event is performed by logically ANDing a first input from the event register with a second input from an event selection register to produce a first AND output including first multiple outputs. The first multiple outputs are logically ORed together to produce a first OR output. The reset signal to the accumulator is generated responsive to the first OR output.

The first OR output may be stored in a shift register. An output from the shift register is logically ANDed with an output of a stage selection register to produce a second AND output. The second AND output includes second multiple outputs. The stage selection register may specify a number of cycles after an event occurs for performing the reset. The second multiple outputs may be logically ORed together to produce a second OR output. The reset signal to the accumulator may be generated responsive to the second OR output. Multiple image patches may be input by an address generation unit (AGU) attached to the processor. The AGU may calculate memory addresses for the image patches. A processing loop for processing the image patches may be initiated. During the processing, the events are generated responsive to the memory addresses. While executing the processing loop, the accumulator may be reset responsive to the selected event. A number of cycles after the selected event may be specified. The reset of the accumulator may be generated after the specified number of cycles. After said at least one selected event, multiple numbers of cycles may be specified, *e.g.* a first number of cycles and a second number of cycles and resets of said accumulator may be generated after both the specified first number and second numbers of cycles.

Various methods are described, performable by a system including a camera arranged to capture multiple image frames. The system includes a processor with an accumulator. Multiple image patches from the image frames are input. A processing loop for processing the image patches is initiated. The accumulator is reset while executing the processing loop and breaking pipelined execution of the processor is avoidable. The processing of the image patches may be over multidimensional zero-overhead loops.

Various systems are described including a processor with an accumulator. Logical circuitry selects an event to produce one or more selected events. The logical circuitry generates a reset signal to the accumulator responsive to the selected event. Responsive to the reset signal, the logical circuitry resets the accumulator to zero or another initial value while avoiding breaking pipelined execution of the processor. An address generation unit (AGU) may be attached to the processor, The events may generated by the address generation unit (AGU). A system may include a first address generation unit and a second address generation unit each configured to generate events. The first logical circuitry may receive the events generated by the first and second address generation units. A second logical circuitry may receive the events generated by the first and second address generation units. A first accumulator may connect to said first logical circuitry and a second accumulator may connect to said second logical circuitry. Responsive to the events, the first logical circuitry is configured to reset the first accumulator and the second logical circuitry is configured to reset the second accumulator.

The events are stored in an event register. The selection of the selected event is performed in a logical AND gate by logically ANDing with a first input from the event register and with a second input from an event selection register to produce a first AND output including first multiple outputs. In a logical OR gate, the first multiple outputs are logically ORed together to produce a first OR output. The reset signal to the accumulator is generated responsive to the first OR output.

The first OR output may be stored in a shift register. The shift register may include bits which are shiftable to enable a history of cycles to be kept. An output from the shift register is logically ANDed with an output of a stage selection register to produce a second AND output. The second AND output includes second multiple outputs. The stage selection register is used by software of the processor to specify the number of cycles after an event is generated by the AGU to generate a reset of said accumulator.

The second multiple outputs may be logically ORed together to produce a second OR output. The reset signal to the accumulator may be generated responsive to the second OR output. The first and second OR outputs may be single bit outputs.

The foregoing and/or other aspects will become apparent from the following detailed description when considered in conjunction with the accompanying drawing figures.

### BRIEF DESCRIPTION OF THE DRAWINGS

Embodiments of the present invention are described below, by way of example only, with reference to the accompanying drawings, wherein:
Figures 1 and 2 illustrate a system including a camera or image sensor mounted in a vehicle, according to an embodiment of the present invention;
Figure 3 illustrates a system block diagram for an image processing system, according to an embodiment of the present invention;
Figure 4a illustrates a simplified system for resetting accumulators;
Figure 4b illustrates another simplified system for resetting accumulators;
Figure 5 shows a hardware implementation of an accumulator reset;
Figure 6a shows a method and Figure 6b which shows a method which may be a continuation of the method of Figure 6a; and
Figure 7 shows a method, according to a preferred embodiment of the present invention.

### DETAILED DESCRIPTION

Reference will now be made in detail to embodiments of the present invention, examples of which are illustrated in the accompanying drawings, wherein like reference numerals refer to the like elements throughout. The features are described below to explain the teachings herein by referring to the Figures.

Embodiments of the present invention are applicable to processors designed for driver assistance systems, and other applications in digital processing for instance other image processing applications and/or audio processing applications.

By way of introduction, the basic concept of pipelined processing is to divide instruction execution into stages that operate independently. In pipelined execution, instructions may pass through the same stages as in an assembly line. With each new processor cycle, a new piece of data may be added to one end of the pipeline and a completed result may be retired out of the other end of the pipeline. Embodiments of the present invention are directed reducing calculational overhead with the use of digital logic circuitry for resetting an accumulator of a processor in real time. Resetting accumulators may be performed while executing a loop in hardware while avoiding breaking out of pipelined execution.

The terms "pipelining", "pipelined processing" "pipelined execution as used herein refers to a technique used in advanced microprocessors in which the processor begins executing a second instruction before the first has been completed. That is, several instructions are in the pipeline simultaneously, each at a different processing stage. The pipeline may be divided into segments and each segment may execute its operation concurrently with other segments. When a segment completes an operation, the result is passed to the next segment in the pipeline and the next operation is fetched from the preceding segment. The terms "pipelining" and "pipelined processing" and "pipelined execution" are used herein interchangeably.

The resetting of accumulators according to embodiments of the present invention may find use in zero-overhead loops for given small/narrow image patches (from captured image frames) that are common in computer vision systems such as driver assistance systems (DASs). The resetting of accumulators may prevents the need to break out of a multidimensional zero-overhead loops (ZOLs) (or break pipelining) "just" to reset an accumulator. The resetting of accumulators according to embodiments of the present invention typically may expand the utility of multidimensional ZOLs.

The terms logical "AND", "ANDing" or "ANDed" as used herein refer to the function of a digital AND gate which logically ANDs together variables at the input to give at least one variable at the output.

The terms logical "OR", "ORing" or "ORed" as used herein refer to the function of a digital OR gate which logically ORs together variables at the input to give at least one variable at the output.

### Definition of "accumulator"

Basically, in the context of accumulator reset according to embodiments of the present invention, the term "accumulator" as used herein is a device which maintains a state. The state may be updated by an "accumulation instruction", which, in turn, is any instruction which functionally performs as:
state = function(state, inputs)

The most common accumulation function is addition: state = state + input

Vector accumulation may be reducing, non-reducing, or cumulative:

```
 state = state + sum(input _vector) # reducing - 8+1 arguments, 1 result
 for i=0:8, state_vector[i] = state_vector[i] + input_vector[i] # non-reducing -
 8+8 arguments, 1 result
 prev_sum=state_vector[7]; for i=0:8, state_vector[i] = prev_sum +
 sum(input_vector for 0 to i) # cumulative
```

Another interesting case is when the function is other than / addition:

```
 state = min(state, input)
 state = max(state,input)
 for i=0:8,
        state_histogram[input_index[i]] = state_histogram[input_index[i]] +
        input_weight[i]]
```

All these examples herein above are "accumulators" in the sense that accumulator resets according to different features of the present invention may be applied to the accumulators.

### "Pipelining" in general versus "software pipelining" in VLIW machines

In general, accumulator reset according to features of the present invention may not be particularly useful on any processor just because the processor is pipelined. For example, consider the loop:

```
 for y=0:H {
        acc=0
        for x=0:W {
        acc+=img(x,y)
        }
```

On a pipelined RISC processor, resetting the accumulator in software creates an overhead, but a relatively small one:

```
 YLOOP:
 SET ACC,0
 XLOOP:
 LOAD R0,img_next_addr //it would be more instructions, but let's ignore it here
 ADD ACC,R0
 BEQ X,W, XLOOP //end XLOOP
 BEQ Y,H, YLOOP
```

Suppose W=8 which means that every 8 iterations, one instruction is spent - SET ACC,0 - to reset the accumulator. If every iteration costs 3 instructions - LOAD, ADD, BEQ - that is 1 instruction of "overhead" for 24 instructions of "useful work" - not that much. Furthermore, it does not matter much whether the processor is pipelined or not, at least it does not matter in any straightforward way. A pipelined RISC processor will or at least could execute all these instructions in a pipelined fashion - whether there is a SET ACC, 0 instruction occasionally being executed or not.

The overhead is much larger on VLIW machines, however, and not because of pipelining in general, but because of, specifically, software pipelining. On a VLIW machine, the loop would look like this:

```
 YLOOP:
 SET ACC,0 //X loop header assuming LOAD latency is 2 cycles, so we can't
              ADD anything for the first 2 cycles
 LOAD R0,img_next_addr
 LOAD R0,img_next_addr
 XLOOP:
```

```
 LOAD R0,img_next_addr ∗AND IN PARALLEL∗ ADD ACC,R0//X loop
 trailer handle values loaded by the last 2 loads
 ADD ACC,R0
 ADD ACC R0
```

On VLIW machines, pipelining is handled differently than, say, on RISC machines. Specifically, pipelining effects are visible to software: on a RISC machine, all instructions following LOAD R0... can assume R0 has the new value - not so on VLIW, where the ADD using the result of the LOAD should be placed two instructions down the road. The result of the LOAD placed two instructions down the road, has the benefit of simplifying hardware: a VLIW processor can issue multiple instructions at the same cycle - like in the example above, where LOAD and ADD are done, in the loop though not in the header or the trailer, simultaneously. A RISC processor can also place the result of the load two instructions down the road - super-scalar/out-of-order processors with RISC instruction sets do this but the cost is relatively complicated hardware mechanisms that analyze, at run-time, the dependencies between the instructions that RISC processors execute in order to figure out how to run the instructions in parallel, and whether it is at all logically possible to run the instructions in parallel.

The upshot is that VLIW with ZOLs, speed up the innermost loops significantly - there's one instruction instead of 3 or more - without complicating the hardware (as does a super-scalar processor that could actually run 3 instructions, or more, in parallel).

Now consider the overhead of resetting an accumulator on a VLIW machine compared to a single-issue RISC machine. Not only is one cycle per every 8 instructions paid- 1/8 is more than 1/24 - but a price is also paid for the header and the trailer. In our example, that is 2 cycles for the header and 2 cycles for the trailer - overall, 5 (1+2+2) cycles of overhead for 8 cycles of useful work.

Therefore, accumulator reset according to the teachings herein is particularly advantageous on a VLIW processor.

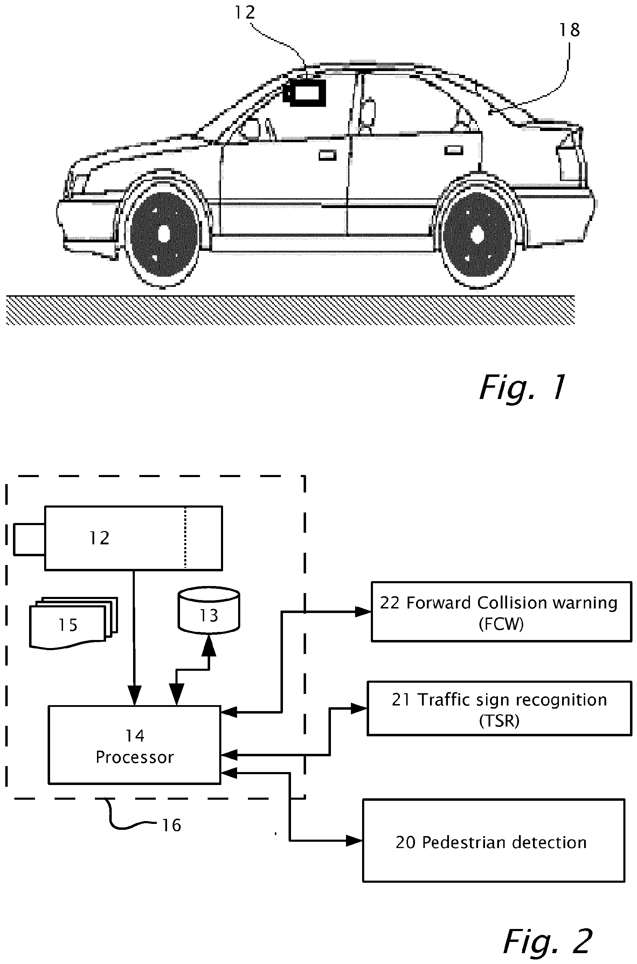

Reference is now made to Figures 1 and 2 which illustrate a system **16** including a camera or image sensor **12** mounted in a vehicle **18,** according to an embodiment of the present invention. Image sensor **12,** imaging a field of view in the forward direction provides image frames **15** in real time and image frames **15** are captured by an image processor **14.** Image processor **14** may be used to process image frames **15** simultaneously and/or in parallel to serve a number of driver assistance systems/applications. The driver assistance systems may be implemented using specific hardware circuitry with on board software and/ or software control algorithms in storage **13.** Image sensor **12** may be monochrome or black-white, i.e. without color separation or image sensor **12** may be color sensitive. By way of example in Figure 2, image frames **15** are used to serve pedestrian detection **20,** traffic sign recognition (TSR) **21** and forward collision warning (FCW) **22.** Image processor **14** is used to process image frames **15** to detect and recognize an image or portions of the image in the forward field of view of camera **12.**

Driver assistance systems may further include lane departure warning systems and headlight control systems. Most driver assistance applications require processing over multiple windows of a single frame and/or multiple image frames. In some cases, image frames **15** are partitioned between different driver assistance applications and in other cases the image frames **15** are shared between the different driver assistance applications.

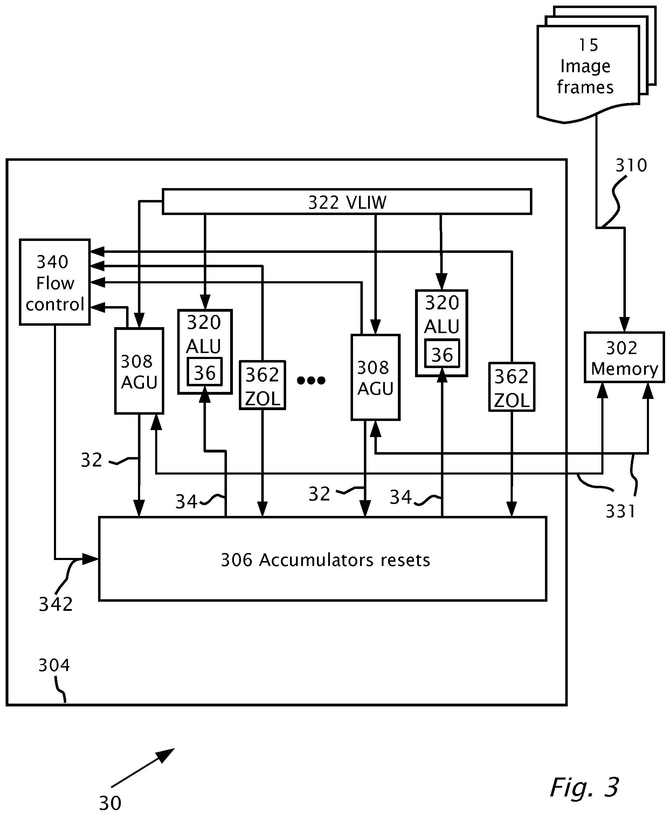

Reference is now made to Figure 3 which illustrates a system block diagram for an image processing system **30** according to an embodiment of the present invention. Image processing system **30** includes a vector processor **304** and a memory **302.** Memory **302** connects to an input of multiple image frames **15** via an image frame bus **310.** Vector processor **304** includes multiple arithmetic logic units (ALU) **320** and multiple address generators **308** which connect to multiple accumulators resets **306** via event line **32.** Multiple zero overhead (ZOL) modules **362** are connected to flow control **340** and multiple accumulators resets **306.** Address generators **308** connect to memory **302** with a memory bus **331.** Address generators **308** also connect to flow controller **340** which provides a flow control line **342** to multiple accumulators resets **306.** Arithmetic logic units (ALU) **320** and address generator **308** connect to a very long instruction word (VLIW) instruction register **322** via their own separate buses (thus allowing simultaneous execution of the relevant op-codes. ALUs **320** have accumulators **36** which are resettable via accumulators resets **306** through accumulator reset line **34.**

With traditional DSP-style zero-overhead loops (ZOLs), a machine repeatedly runs a piece of code, decrementing a counter until the counter becomes zero. At first glance, the counter works with rectangles from image patches or 1 dimensional (1D) arrays. Suppose a 1D array of size N takes N/8 iterations to process as may take place on a single instruction multiple data (SIMD) machine processing 8 data items at a time for example. So the ZOL counter is set to N/8. For a 2D rectangle of width W and height H, W^{∗}H/8 iterations are needed. A question may arise as to why not set the counter to W^{∗}H/8, and use ZOL as with 1D arrays? An answer to the question is the possible problem in maintaining X & Y coordinates. With 1D arrays, there is a 1D coordinate called i that gets the values, assuming increments of 8:

```
              i=0
              i=8
              i=N
```

With 2D coordinates, X and Y, *every time the end of a rectangle's row is reached,* there is a special case:

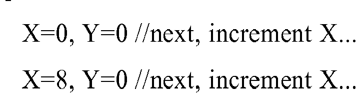

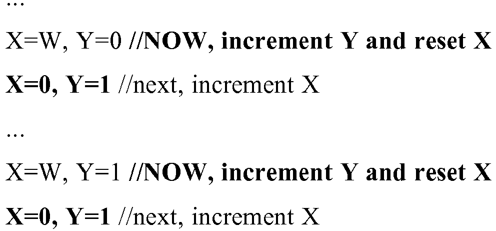

The special case is handled by special code in the program, so it may not be possible to just run the same code W^{∗}H/8 times using a ZOL iteration counter. Similar issues may occur with 3D arrays, 4D arrays, etc., which may mean only the innermost dimension can be implemented using a traditional DSP ZOL and the outer dimensions become regular loops. For example:

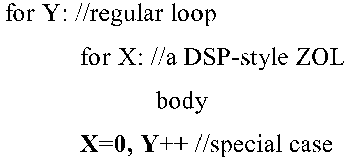

Or, with 3D data, and different nesting - X is the outermost loop:

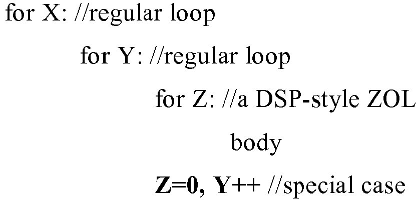

Where the innermost dimension is implemented using a traditional DSP ZOL there may not be a problem when the innermost loop executes many times, but may become a problem when the inner loop executes just a few times. This way, the innermost loop is in fact "zero-overhead" - but the frequently executing outer loops are ***not*** zero-overhead. So there are significant overheads associated with breaking pipelined execution of the inner loops that traditional ZOLs with 1D data do not eliminate. These overheads are especially large for very large instruction word (VLIW) machines. SIMD and VLIW are basically orthogonal, there are SIMD VLIW machines, SIMD machines that are not VLIW, and VLIW machines that are not SIMD. Vector microcode processor (VMP) is both SIMD and VLIW, a prominent example of a SIMD VLIW machine is TI's C64 family for example.

In contrast to SIMD VLIW machines, vector processor **304** address generation units (AGUs) **308** allow use of a single ZOL by:
- Taking care of the special case - *end-of-innermost-dimension* - automatically in hardware. Every time an AGU **308** is issued a "next" command, the hardware checks for end-of-dimension conditions.
- Raising a "break out of the loop" signal for flow control unit **340** only at the end of the *outermost* loop (when so configured).

For example, a loop over 3D data can look like this:

```
        my_iter=Iterator3D(base=..., xcount=..., ycount=..., zcount=...);
        iterate { //a single ZOL
              data=my_iter.load(); //takes care of end-of-dimension conditions,
              breaks when all data is processed
              ... }
```

As explained above, it may be beneficial to stay inside a ZOL for as long as possible. An example of an overhead avoidable using a feature of the present invention is breaking out of a ZOL. Every time a break out occurs, loop trailer code is executed and every time a loop is re-entered, loop header code is executed by ZOL module **362.** AGUs **308** of vector processor **304** communications to flow control unit **340** are beneficial because their need to handle end-of-row conditions is eliminated. AGUs **308** of vector processor **304** communications to flow control unit **340** are beneficial also because the loop is entered and only quit at the end of the 2D region, not at the end of every row.

At the beginning of every row X is reset to its minimal coordinate and Y is incremented to the next row which may be handled by AGU **308** without needing to break out of the loop. We would, however, break out of the innermost loop over rows if something special is done at the beginning of every row. One of the most common things to be done at the beginning of rows is resetting an accumulator **36.** For a simple example, consider a horizontal integral image where

```
 out (x, y) = sum (in(1: x, y)):
                     for y:
                           acc = 0
                     for x:
                           acc += in(x,y) // acc:=acc+in(x,y)
                           out(x,y) = acc
```

In this loop above, the same operation is done for all pixels in all rows, except for zeroing the accumulator **36** at the beginning. Therefore, if there is no accumulator reset, nested loops are used along the lines of:

```
        iterate {
              A.reset();
              iterate {
                     in=in_iter.load();
                     low,hi=A.cumsum_8ub_8uh(in); //vectorized cumulative
                     sum
                     out_iter.store(low,hi); } }
 In vector processor 304, accumulator reset can be used to create a single loop:
              iterate {
                     in=in_iter.load();
                     low,hi=A.cumsum_8ub_8uh(in,acc_reset=(in_iter,i));
                     out_iter.store(low,hi);
                     }
```

Vector processor **304** instructs the hardware to behave as follows. An event is signaled to the accumulator reset **306** every time the iterator in_iter reaches the end of its innermost loop (the loop over rows may be the innermost or it could be the loop over columns instead, depending on the programming of the iterator which is omitted from the example). Upon that event, the accumulator reset **306** zeros the accumulator **36** such that instead of updating the accumulator **36** as usual, the accumulator reset **306** resets the accumulator **36** *and then updates the accumulator **36.***

The description above is different from simply resetting the accumulator **36** - that would be incorrect. For example, the need to compute the cumulative sum of the first 8 pixels in the row (just as well as the second 8-pixel tuple, then third, etc.), and resetting the accumulator **36** instead would get the first 8 pixels ignored. So accumulator reset **306** modifies the behavior of the *cumsum* instruction to the semantics, "reset the accumulator **36,** then do your job as usual". This is also how the accumulator reset works with other accumulation instructions - plain vectorized accumulation, dimension-reducing accumulation, etc.]

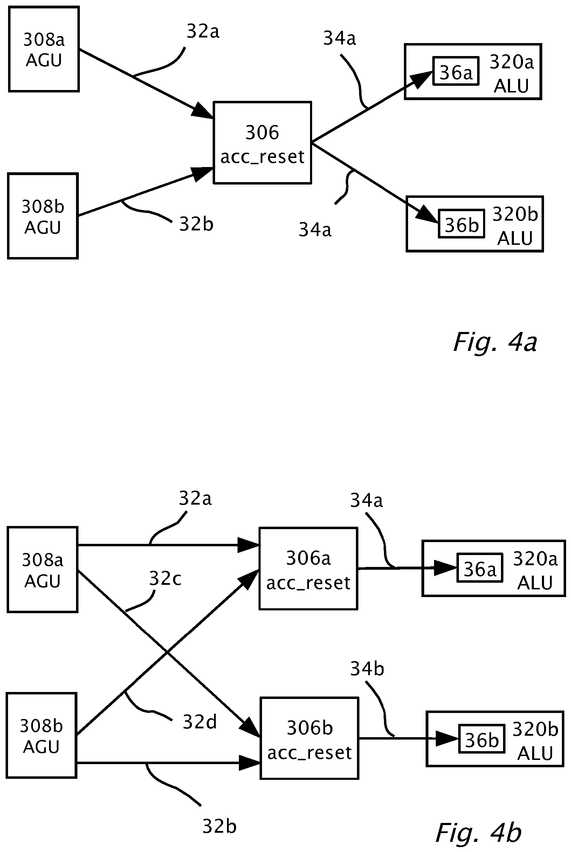

Reference is now made to Figures 4a and 4b which show different signaling schemes using two accumulators (not shown each in ALU **320** and a single accumulator reset (acc reset) **306,** according to embodiments of the present invention. The terms" accumulator reset **306** and logical circuitry **306** are used herein interchangeably.

Referring specifically to Figure 4a, single accumulator reset (acc reset) **306** may receive an event from AGU **308a,** AGU **308b** via respective event lines **32a** or **32b** and/ or from multiple ZOL modules **362.** In general the event comes from a place which is not the normally used instruction fetch/decode hardware. The event may occur at the beginning of a row, the end of a row or the last point in the image patches from captured image frames **15.** The event typically encodes an AGU **308** number (so that an event can come from any of the 2 AGUs **308a** or **308b** used in this example found in vector processor **304)** and the location in the 2/3/4D region of the image patches which upon reaching the event is signaled. The event can then be scheduled to provide a reset from accumulator reset **306** via reset lines **34** because some operations within vector processor **304** need the reset, some do not, and each operation happens at a different delay. Therefore at some point at a beginning-of-row or some other special iteration - and "at this point in time", an event is signaled that modifies the behavior of accumulator reset **306.** In reality, however, the AGU **308** will reach that iteration earlier than the accumulator reset due to modulo scheduling. Modulo Scheduling, another name for pipe-lining, is a form of instruction scheduling that interleaves different iterations of a loop. Based on the event flow controller **340** enables the reset from accumulator reset **306** to be applied to either accumulator **36a** of ALU **320a** and/ or accumulator **36b** of ALU **320b.**

In Figure 4b, AGU **308a** or AGU **308b** may have events provided to accumulator resets **306a** and **306b** via event lines **32a, 32b, 32c, 32d** and/ or from multiple ZOL modules **362.** Events from AGU **308a** may be provided to accumulator resets **306a** and/ or **306b.** Similarly events from AGU **308b** may be provided to accumulator resets **306a** and/ or **306b.** Resets from accumulator resets **306a** and **306b** via reset lines **34a** and **34b** respectively may be applied to respective accumulators **36a** and **36b** based on the events generated by AGU **308a** and/ or AGU **308b.**

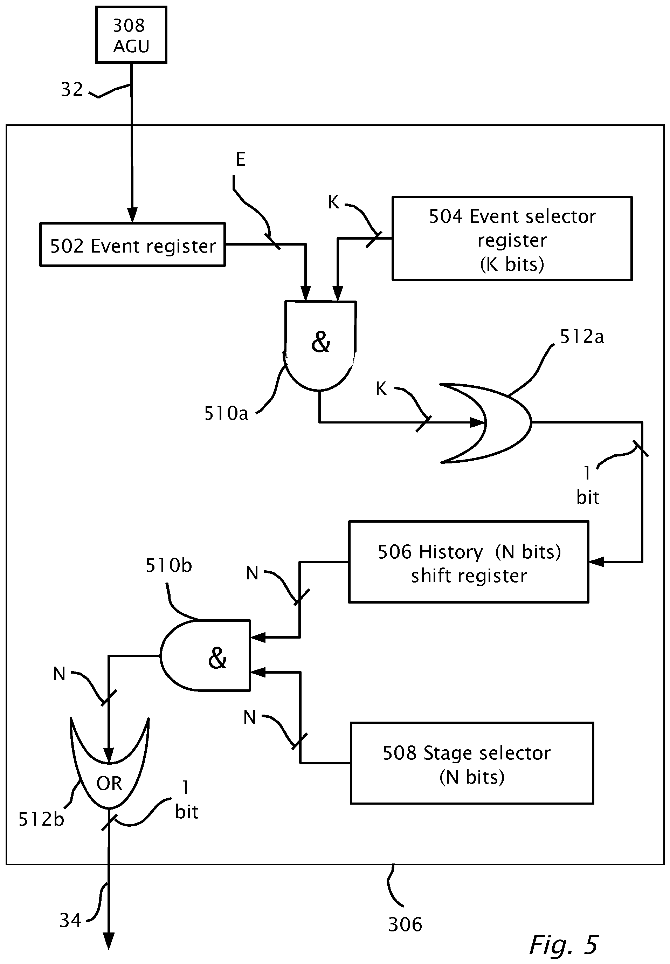

Reference is now made to Figure 5 which shows a hardware implementation of an accumulator reset **306,** according to a feature of the present invention. A number of events **32** are input into event register **502.** The output of event register **502** is **E** bits which correspond with the number of events **32** which is logically 'ANDed' together with the **K** bits of event selector register **504** via AND gate **510a.** The **K** bit output of AND gate **510a** is then inputted into OR gate **512a,** where the **K** bits are ORed with each other, which gives a single bit output which is placed into history shift register **506.** The **N** bit output of history shift register **506** is then 'ANDed' with the N bits of stage selector **508** via AND gate **510b.** The **N** bit output of AND gate **510b** is then input into the **N** bit input of OR gate **512b,** where the **N** bits are ORed with each other to give a single bit output. The single bit output of OR gate **512a** may be the accumulator reset **34** shown in the previous Figures.

At this point in the explanation, the utility of the features taught herein should be clear, as well as the general way to achieve the utility of the teachings. In further detail, the core hardware mechanisms that make the utility of the features of the present invention actually work is shown below in the many different contexts where the features are useful. In particular, two things are taken into account:
- **Different event types.** Vector processor **304** AGUs **308** support 2D, 3D and 4D regions. A programmer might want an accumulator to be reset, not necessarily at the beginning of every row, but at many kinds of special locations within the 2/3/4D region.
- **Scheduling delays.** Logically, at some point at a beginning-of-row or some other special iteration - and "at this point in time", an event is signaled that modifies the behavior of the accumulator. In reality, however, the AGU **308** will reach that iteration earlier than the accumulator due to modulo scheduling. Furthermore, some operations need the reset, some do not, and each happens at a different delay.

Here is how the preferred hardware described above and specifically hardware implementation of accumulator resets shown in Figure 5 handles these concerns.

### Different event types

In vector processor **304,** a hardware register called event selector register **504** keeps an event number, so that an accumulator reset **306** responds to an event chosen by the programmer. The event number encodes the AGU **308** number (so that an event can come from any of the 4 AGUs **308** used in this example found in vector processor **304)** and upon reaching the location in the 2/3/4D region an event is signaled. Specifically, vector processor **304** supports the following locations according to a list (the list could be extended - the locations were chosen based on the assumption that in vector microcode processor programs, these are the particularly useful locations):
In the list, **bold** names name location types, and non-bold i, z and w name internal AGU **308** counters corresponding to the current location. z is the location along the Z (3rd) region dimension, w is the location along the W (4th) region dimension, and i is the location of either the X (1st) or Y (2nd) dimension, depending on which of them is the innermost dimension - in a "for y { for x }" loop, i is the X dimension counter, and in a "for x { for y }" loop, i is the Y dimension counter.
**i** - This condition will raise if (i= =0 & z==0 & w==0) - that is, *once* every time i reaches 0
**z** - This condition will raise if (z==0 & w==0) - that is, *once* every time z reaches 0
**w** - This condition will raise if w==0 - that is, *once* every time w reaches 0
**iz** - This condition will raise if i==0 - that is, when i reaches 0, *through all z iterations*
**zw** - This condition will raise if z==0 - that is, when z reaches 0, *through all w iterations*

The following pseudo-code illustrates when each of these events "fire" given an AGU **308** iterating over a 4D region such that X is the outermost dimension (it should be noted that AGUs **308** of vector processor **304** support either X or Y as their outermost region dimension, but not Z or W - Z is always nested in either X or Y, and W is always nested in Z; this explains why some of the obvious conditions that one could imagine are not available.)

```
 void izw(int xcount, int ycount, int zcount, int wcount) {
 int x,y,z,w;
        for(x=0; x<xcount; ++x) {
              for(y=0; y<ycount; ++y) {
                     for(z=0; z<zcount; ++z) {
                           for(w=0; w<wcount; ++w) {
                           int i=y; //y is our inner dimension
                           printf("x=%d y=%d z=%d w=%d", x, y, z, w);
                           printf(i==0 && z==0 && w==0? " i": " ");
                           printf(z==0 && w==0? " z": " ");
                           printf(w==0? " w": " ");
                           printf(i==0? " iz": " ");
                           printf(z==0? " zw": " ");
                           printf("\n"); } } } } }
```

This will print, given counts of 2 for all dimensions:
x=0 y=0 z=0 w=0 i z w iz zw
x=0 y=0 z=0 w=1 iz zw
x=0 y=0 z=1 w=0 w iz
x=0 y=0 z=1 w=1 iz
x=0 y=1 z=0 w=0 z w zw
x=0 y=1 z=0 w=1 zw
x=0 y=1 z=1 w=0 w
x=0 y=1 z=1 w=1
x=1 y=0 z=0 w=0 i z w iz zw
x=1 y=0 z=0 w=1 iz zw
x=1 y=0 z=1 w=0 w iz
x=1 y=0 z=1 w=1 iz
x=1 y=1 z=0 w=0 z w zw
x=1 y=1 z=0 w=1 zw
x=1 y=1 z=1 w=0 w
x=1 y=1 z=1 w=1

### Scheduling delays

In order to handle scheduling delays, a way is to:
Keep a history of events - a reaction to events several cycles after they happened, at precisely the cycle required. The reaction is so that there are some accumulation operations that are reset during the iteration in question, and other operations that are not.

Specify which operations react to the events - along the lines of, "the first two operations issued during the iteration need not be affected, but the third and the fourth are". Specifying which operations react to the events may be performed using two registers, software-programmable stage selector register **508** and an internal, hardware-maintained history shift register **506.**

History shift register 506 is a 32-bit shift register updated at every cycle as follows:
All bits are shifted to the left losing the most significant bit (MSB), so a history of at most 32 cycles is kept.

The least significant bit (LSB) is set to 1 if an AGU **308** issued a load/store command that incremented the counters of the AGU **308** such that a location was reached triggering the event type configured at event selector register **504.**

The behavior of an accumulator reset **306** is modified to reset accumulator **36** if an accumulation command is issued at a cycle when stage selector **508** & history shift register **506** != 0. i.e. not equal to zero, that is, when a bit is set. Stage selector **508** is thus used by software to specify the one or more number or numbers of cycles at which, after an event happens, reset should occur - in the hypothetical example of "third and fourth instructions", 2 bits corresponding *to the delay* between those instructions and the AGU **308** load/store command triggering the event would be set. That is, bits 7 and 9 are set, assuming that the 3rd instruction is issued 7 cycles after the AGU **308** load/store command and the 4th instruction is issued 9 cycles after the AGU **308** command. Stage selector **508** may be configured to select several stages.

Accumulator reset is a feature further expanding the utility of multidimensional ZOLs. Also there are specific reasons for accumulator reset **306** to be more useful when compared to the average general-purpose processor or DSP accelerator. Accumulator reset is useful, very specifically, when the accumulators **36** of ALUs **320** are reset every time through very short loops. Vector processor **304** has more such cases than the average processor because of having to process narrow regions of interest and because of running deeply nested loops with very short innermost dimensions, such as loops to implement some forms of matrix multiplication and filtering.

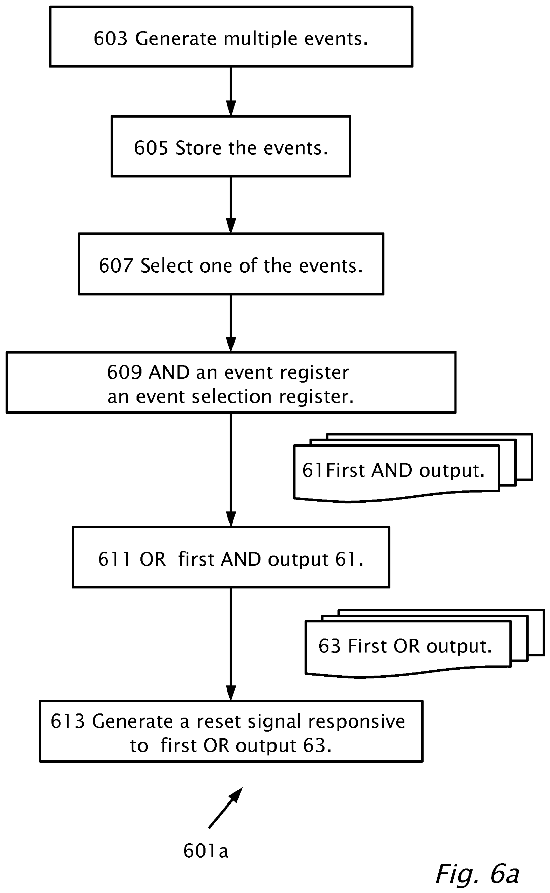

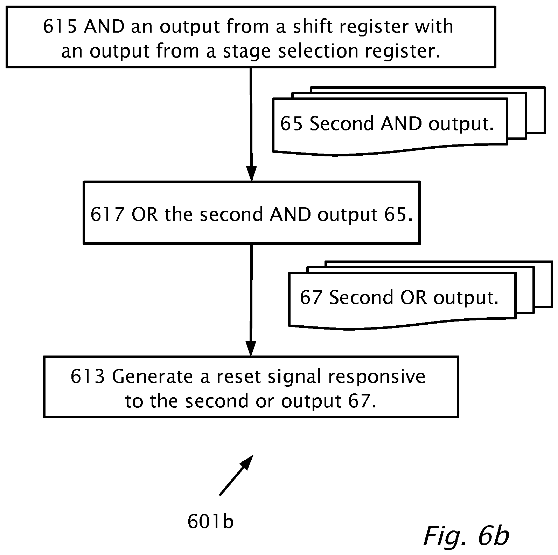

Reference is now made to Figure 6a which shows a method **601a** and Figure 6b which shows a method **601b** which may be a continuation of method **601a,** according to an embodiment of the present invention. In step **603** multiple events may be generated by an address generation unit (AGU) **308** and/ or ZOL module **362.** The events generated by the AGU **308** and/ or ZOL module **362** may be stored in memory **302** (step **605)** or passed accumulator resets **306** by event lines **32.** In step **607,** at least one of the events generated AGU **308** and/ or ZOL module **362** may be selected and number of events **32** from AGU **308** and/ or ZOL module **362** are input into event register **502.** The output of event register **502** is **E** bits which correspond with the number of events **32** which is logically 'ANDed' together with the **K** bits of event selector register **504** via AND gate **510a** (step **609).** The **K** bit output **61** of AND gate **510a** is then inputted into OR gate **512b** (step **611)** which gives a single bit output **63** by virtue of the **K** bits ORed with each other. The single bit output **63** is placed into history shift register **506.** The single bit output **63** of OR gate **512a** may then be the basis for the accumulator reset **34** shown in the previous Figures.

Where the single bit output **63** of OR gate **512a** is not the basis for the accumulator reset **34** shown in the previous figures, the **N** bit output of history shift register **506** is then 'ANDed' with the **N** bits of stage selector **508** via AND gate **510b** (step **615).** The **N** bit output **65** of AND gate **510b** is then input into the **N** bit input of OR gate **512b** (step **617),** where the **N** bits are ORed with each other to give a single bit output **67.** The single bit output **67** of OR gate **512b** may then be the basis for the accumulator reset **34** shown in the previous Figures.

A simplistic implementation of steps **615** and **617** could have a constant delay (of 3 cycles for example), so there is no nee need for an AND and an OR in step **615** and **617** respectively. Rather, such an implementation would sample the event 3 times and use the oldest sample. A further simplification is not to have a history at all but rather reset the accumulator **36** immediately when the event arrives via event line **32.** An event history could be kept, for example, at the AGU **308** side which would give the same accumulator reset **306** idea shown above. The constant delay may also be applied to steps **609** and **611.**

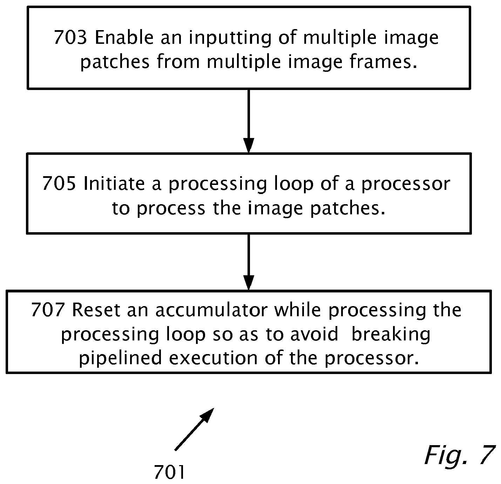

Reference is now made to Figure 7 which shows a method **701,** according to an embodiment of the present invention. As shown previously vector processor **304** includes multiple arithmetic logic units (ALU) **320** and multiple address generators **308** which connect to multiple accumulators resets **306** via event lines **32.** In step **703** multiple image patches from image frames **15** are inputted into processor **304** via memory **302.** In step **705** a processing loop for processing the image patches may be initiated. The processing of the image patches (step **705)** may be over multidimensional zero-overhead loops (ZOLs) supervised by ZOL module **362.** Resetting accumulator **36** (step **707),** while processing the processing loop, avoids breaking pipelined execution of processor **304.** The resetting of accumulator **36** in step **707,** also avoids breaking out of the multidimensional zero-overhead loops (ZOLs).

The indefinite articles "a", "an" is used herein, such as "an output", "an AND gate have the meaning of "one or more" that is "one or more outputs" or "one or more AND gates".

Although selected features of the present invention have been shown and described, it is to be understood the present invention is not limited to the described features. Instead, it is to be appreciated that changes may be made to these features without departing from the invention, the scope of which is defined by the claims.

## Claims

1. A method performable by a processor (304) including an accumulator (36), the method comprising:
processing data over a multidimensional zero-overhead loop using said accumulator;
generating at least one event, said at least one event being generated during processing of the data and relating to a location in the data or a point in the processing;
storing said at least one generated event in an event register (502);
generating a reset signal to the accumulator (36) responsive to said at least one stored event;
responsive to said reset signal, resetting the accumulator (36) to zero or an initial value while avoiding breaking pipelined execution of the processor (304);
wherein generating said reset signal is performed by:
logically ANDing a first input from said event register (502) with a second input from an event selector register (504) thereby producing a first AND output including a first plurality of outputs, and
logically ORing together the first plurality of outputs, thereby producing a first OR output, wherein said generating said reset signal to the accumulator is responsive to said first OR output.

2. The method of claim 1, comprising keeping, by the event selector register, an event number encoding an AGU number.

3. The method of claim 1, further comprising:
generating said at least one event by an address generation unit (AGU) (308) operatively attached to the processor.

4. The method of claim 1, further comprising:
storing said first OR output in a shift register (506);
logically ANDing an output from said shift register (506) with an output of a stage selector register (508), thereby producing a second AND output, wherein said second AND output includes a second plurality of outputs; wherein said stage selector register specifies a number of cycles after the generating of the at least one event for performing said resetting; and
logically ORing together said second plurality of outputs, thereby producing a second OR output; wherein said generating said reset signal to the accumulator is responsive to said second OR output.

5. The method of claim 1, further comprising:
inputting a plurality of image patches by an address generation unit (AGU) (308) operatively attached to the processor (304);
calculating memory addresses for said plurality of image patches by the address generation unit (AGU) (308);
initiating a multi-dimensional processing loop for processing by the processor (304) said image patches;
during said processing, generating said at least one event responsive to said memory addresses;and
while processing said processing loop, said resetting the accumulator (36) of the processor responsive to said at least one stored event.

6. The method of claim 5, further comprising:
specifying a number of cycles after said generating of the at least one event; and
said generating said reset of said accumulator occurs after said specified number of cycles.

7. The method of claim 5 further comprising:
after said generating of the at least one event, specifying a first number of cycles and a second number of cycles; and
said generating resets of said accumulator after said specified first number and second number of cycles.

8. A system comprising:
a processor (304) for processing data over a multidimensional zero-overhead loop using an accumulator (36);
a unit, circuit or module configured to generate during processing of the data at least one event relating to a location in the data or a point in the processing;
an event register (502) configured to store said at least one event; wherein logical circuitry is configured to generate a reset signal to the accumulator responsive to said at least one stored event, and responsive to said reset signal, to reset the accumulator (36) to zero or an initial value while avoiding breaking pipelined execution of the processor;
an event selector register (504);
a logical AND gate having a first input from said event register (502), a second input from said event selector register (504) and a first AND output including a first plurality of outputs, and
a logical OR gate operable to logically OR together the first plurality of outputs, to produce a first OR output, wherein said reset signal to the accumulator is generated responsive to said first OR output.

9. The system of claim 8, wherein the event selector register is configured to keep an event number encoding an AGU number.

10. The system of claim 8, further comprising:
an address generation unit (AGU) (308) operatively attached to the processor; wherein the events are generated by said address generation unit (AGU).

11. The system of claim 8, further comprising:
a first address generation unit and a second address generation unit, each configured to generate events;
said logical circuitry being a first logical circuitry configured to receive the events generated by the first and second address generation units;
a second logical circuitry configured to receive the events generated by the first and second address generation units;
a first accumulator operatively connected to said first logical circuitry; and
a second accumulator operatively connected to said second logical circuitry; wherein responsive to said events, the first logical circuitry resets the first accumulator and the second logical circuitry resets the second accumulator.

12. The system of claim 8, further comprising:
a shift register (506) configured to store said first OR output;
a stage selector register (508); wherein an output from said shift register (506) is logically ANDed with an output of said stage selector register (508) to produce thereby a second AND output,
wherein said second AND output includes a second plurality of outputs; wherein said stage selector register specifies a number of cycles after the generation of the at least one event to reset the accumulator (36);
a logical OR gate operable to logically OR together said second plurality of outputs, to produce thereby a second OR output; and
generate said reset signal to the accumulator responsive to said second OR output.

13. The system of claim 12, wherein said shift register includes bits which are shiftable to enable a history of instruction cycles to be kept.

14. The system of claim 12, wherein said stage selector register is used by a software of said processor to specify at least one number of cycles after an event generated by said AGU happens to generate a reset of said accumulator.

15. The system of claim 12, wherein said second OR output is a single bit output; or wherein said first OR output is a single bit output.

## Patentansprüche

1. Verfahren, das durch einen Prozessor (304), der einen Akkumulator (36) enthält, ausführbar ist, wobei das Verfahren Folgendes umfasst:
Verarbeiten von Daten über eine mehrdimensionale Schleife ohne Aufwand unter Verwendung des Akkumulators;
Erzeugen mindestens eines Ereignisses, wobei das mindestens eine Ereignis während des Verarbeitens der Daten erzeugt wird und sich auf einen Ort in den Daten oder einen Punkt in der Verarbeitung bezieht;
Speichern des mindestens einen erzeugten Ereignisses in einem Ereignisregister (502);
Erzeugen eines Rückstellsignals für den Akkumulator (36) als Reaktion auf das mindestens eine gespeicherte Ereignis;
als Reaktion auf das Rückstellsignal Rückstellen des Akkumulators (36) auf null oder einen Anfangswert, während eine Unterbrechung einer Pipeline-Ausführung des Prozessors (304) vermieden wird;
wobei das Erzeugen des Rückstellsignals ausgeführt wird durch:
Ausführen einer logischen UND-Operation an einer ersten Eingabe von dem Ereignisregister (502) und an einer zweiten Eingabe von einem Ereignisselektorregister (504), wodurch eine erste UND-Ausgabe erzeugt wird, die mehrere erste Ausgaben enthält, und
Ausführen einer logischen ODER-Operation an den mehreren ersten Ausgaben, wodurch eine erste ODER-Ausgabe erzeugt wird, wobei das Erzeugen des Rückstellsignals für den Akkumulator als Reaktion auf die erste ODER-Ausgabe erfolgt.

2. Verfahren nach Anspruch 1, das umfasst, durch das Ereignisselektorregister eine Ereignisnummer zu unterhalten, die eine AGU-Nummer codiert.

3. Verfahren nach Anspruch 1, das ferner Folgendes umfasst:
Erzeugen des mindestens einen Ereignisses durch eine Adressenerzeugungseinheit (AGU) (308), die betriebstechnisch am Prozessor angebracht ist.

4. Verfahren nach Anspruch 1, das ferner Folgendes umfasst:
Speichern der ersten ODER-Ausgabe in einem Schieberegister (506);
Ausführen einer logischen UND-Operation an einer Ausgabe von dem Schieberegister (506) und an einer Ausgabe eines Stufenselektorregisters (508), wodurch eine zweite UND-Ausgabe erzeugt wird, wobei die zweite UND-Ausgabe mehrere zweite Ausgaben enthält; wobei das Stufenselektorregister eine Anzahl von Zyklen nach dem Erzeugen des mindestens einen Ereignisses zum Ausführen der Rückstellung spezifiziert; und
Ausführen einer logischen ODER-Operation an den mehreren zweiten Ausgaben, wodurch eine zweite ODER-Ausgabe erzeugt wird; wobei das Erzeugen des Rückstellsignals für den Akkumulator als Reaktion auf die zweite ODER-Ausgabe erfolgt.

5. Verfahren nach Anspruch 1, das ferner Folgendes umfasst:
Eingeben mehrerer Bildflecken durch eine Adressenerzeugungseinheit (AGU) (308), die betriebstechnisch an dem Prozessor (304) angebracht ist,
Berechnen von Speicheradressen für die mehreren Bildflecken durch die Adressenerzeugungseinheit (AGU) (308);
Einleiten einer mehrdimensionalen Verarbeitungsschleife zum Verarbeiten der Bildflecken durch den Prozessor (304); und
während der Verarbeitung Erzeugen des mindestens einen Ereignisses als Reaktion auf die Speicheradressen;
wobei während des Verarbeitens der Verarbeitungsschleife das Rückstellen des Akkumulators (36) des Prozessors als Reaktion auf das mindestens eine gespeicherte Ereignis erfolgt.

6. Verfahren nach Anspruch 5, das ferner Folgendes umfasst:
Spezifizieren einer Anzahl von Zyklen nach dem Erzeugen des mindestens einen Ereignisses;
wobei das Erzeugen des Rückstellens des Akkumulators nach der spezifizierten Anzahl von Zyklen geschieht.

7. Verfahren nach Anspruch 5, das ferner Folgendes umfasst:
nach dem Erzeugen des mindestens einen Ereignisses Spezifizieren einer ersten Anzahl von Zyklen und einer zweiten Anzahl von Zyklen;
wobei das Erzeugen von Rückstellungen des Akkumulators nach der spezifizierten ersten Anzahl und zweiten Anzahl von Zyklen geschieht.

8. System, das Folgendes umfasst:
einen Prozessor (304) zum Verarbeiten von Daten über eine mehrdimensionale Schleife ohne Aufwand unter Verwendung eines Akkumulators (36);
eine Einheit, eine Schaltungsanordnung oder ein Modul, die bzw. das konfiguriert ist, während der Verarbeitung der Daten mindestens ein Ereignis bezüglich eines Orts in den Daten oder eines Punkts in der Verarbeitung zu erzeugen;
ein Ereignisregister (502), das konfiguriert ist, das mindestens eine Ereignis zu speichern; wobei eine logische Schaltungsanordnung konfiguriert ist, ein Rückstellsignal für den Akkumulator als Reaktion auf das mindestens eine gespeicherte Ereignis zu erzeugen und als Reaktion auf das Rückstellsignal den Akkumulator (36) auf null oder einen Anfangswert zurückzustellen, während eine Unterbrechung einer Pipeline-Ausführung des Prozessors vermieden wird;
ein Ereignisselektorregister (504);
ein logisches UND-Gatter mit einer ersten Eingabe von dem Ereignisregister (502), einer zweiten Eingabe von dem Ereignisselektorregister (504) und einer ersten UND-Ausgabe, die mehrere erste Ausgaben enthält, und
ein logisches ODER-Gatter, das betreibbar ist, an den mehreren ersten Ausgaben eine logische ODER-Operation auszuführen, um eine erste ODER-Ausgabe zu erzeugen, wobei das Rückstellsignal für den Akkumulator als Reaktion auf die erste ODER-Ausgabe erzeugt wird.

9. System nach Anspruch 8, wobei das Ereignisselektorregister konfiguriert ist, eine Ereignisnummer zu unterhalten, die eine AGU-Nummer codiert.

10. System nach Anspruch 8, das ferner Folgendes umfasst:
eine Adressenerzeugungseinheit (AGU) (308), die betriebstechnisch an dem Prozessor angebracht ist; wobei die Ereignisse durch die Adressenerzeugungseinheit (AGU) erzeugt werden.

11. System nach Anspruch 8, das ferner Folgendes umfasst:
eine erste Adressenerzeugungseinheit und eine zweite Adressenerzeugungseinheit, die jeweils konfiguriert sind, Ereignisse zu erzeugen;
wobei die logische Schaltungsanordnung eine erste logische Schaltungsanordnung ist, die konfiguriert ist, die durch die erste und die zweite Adressenerzeugungseinheit erzeugten Ereignisse zu empfangen;
eine zweite logische Schaltungsanordnung, die konfiguriert ist, die durch die erste und die zweite Adressenerzeugungseinheit erzeugten Ereignisse zu empfangen;
einen ersten Akkumulator, der betriebstechnisch mit der ersten logischen Schaltungsanordnung verbunden ist; und
einen zweiten Akkumulator, der betriebstechnisch mit der zweiten logischen Schaltungsanordnung verbunden ist; wobei als Reaktion auf die Ereignisse die erste logische Schaltungsanordnung den ersten Akkumulator zurückstellt und die zweite logische Schaltungsanordnung den zweiten Akkumulator zurückstellt.

12. System nach Anspruch 8, das ferner Folgendes umfasst:
ein Schieberegister (506), das konfiguriert ist, die erste ODER-Ausgabe zu speichern;
ein Stufenselektorregister (508); wobei an einer Ausgabe von dem Schieberegister (506) und an einer Ausgabe des Stufenselektorregisters (508) eine logische UND-Operation ausgeführt wird, um dadurch eine zweite UND-Ausgabe zu erzeugen,
wobei die zweite UND-Ausgabe mehrere zweite Ausgaben enthält; wobei das Stufenselektorregister eine Anzahl von Zyklen nach der Erzeugung des mindestens einen Ereignisses spezifiziert, um den Akkumulator (36) zurückzustellen;
ein logisches ODER-Gatter, das betreibbar ist, an den mehreren zweiten Ausgaben eine logische ODER-Operation auszuführen; und
das Rückstellsignal für den Akkumulator als Reaktion auf die zweite ODER-Ausgabe zu erzeugen.

13. System nach Anspruch 12, wobei das Schieberegister Bits enthält, die verschiebbar sind, um eine Entwicklung von Anweisungszyklen, die zu behalten sind, zu ermöglichen.

14. System nach Anspruch 12, wobei das Stufenselektorregister durch eine Software des Prozessors verwendet wird, um mindestens eine Anzahl von Zyklen zu spezifizieren, nachdem ein durch die AGU erzeugtes Ereignis ein Rückstellen des Akkumulators erzeugt.

15. System nach Anspruch 12, wobei die zweite ODER-Ausgabe eine Einzelbitausgabe ist; oder wobei die erste ODER-Ausgabe eine Einzelbitausgabe ist.

## Revendications

1. Procédé réalisable par un processeur (304) comportant un accumulateur (36), le procédé comprenant : le traitement de données sur une boucle multidimensionnelle à surdébit nul à l'aide dudit accumulateur ;
la génération d'u moins un événement, ledit au moins un événement étant généré durant un traitement des données et se rapportant à un emplacement dans les données ou à un point dans le traitement ;
le stockage dudit au moins un événement généré dans un registre d'événements (502) ;
la génération d'un signal de réinitialisation de l'accumulateur (36) en réponse audit au moins un événement stocké ;
en réponse audit signal de réinitialisation, la réinitialisation de l'accumulateur (36) à zéro ou à une valeur initiale tout en évitant d'interrompre l'exécution en pipeline du processeur (304) ;
dans lequel la génération dudit signal de réinitialisation est réalisée en :
effectuant une opération logique ET sur une première entrée dudit registre d'événements (502) avec une seconde entrée d'un registre de sélection d'événements (504) produisant ainsi une première sortie ET comportant une première pluralité de sorties, et
effectuant une opération logique OU sur l'ensemble de la première pluralité de sorties, produisant ainsi une première sortie OU, dans lequel ladite génération dudit signal de réinitialisation de l'accumulateur se produit en réponse à ladite première sortie OU.

2. Procédé selon la revendication 1, comprenant la conservation, par le registre de sélection d'événements, d'un numéro d'événement codant un numéro d'AGU.

3. Procédé selon la revendication 1, comprenant en outre :
la génération d'au moins un événement par une unité de génération d'adresses (AGU) (308) reliée fonctionnellement au processeur.

4. Procédé selon la revendication 1, comprenant en outre :
le stockage de ladite première sortie OU dans un registre à décalage (506) ;
l'exécution d'une opération logique ET sur une sortie dudit registre à décalage (506) avec une sortie d'un registre de sélecteur de stade (508), produisant ainsi une seconde sortie ET, dans lequel ladite seconde sortie ET comporte une seconde pluralité de sorties ; dans lequel ledit registre de sélection de stade spécifie un certain nombre de cycles après la génération de l'au moins un événement pour réaliser ladite réinitialisation ; et
l'exécution d'une opération logique OU sur l'ensemble de ladite seconde pluralité de sorties, produisant ainsi une seconde sortie OU ; dans lequel ladite génération dudit signal de réinitialisation de l'accumulateur se produit en réponse à ladite seconde sortie OU.

5. Procédé selon la revendication 1, comprenant en outre :
l'entrée d'une pluralité de correctifs d'image par une unité de génération d'adresses (AGU) (308) reliée fonctionnellement au processeur (304) ;
le calcul d'adresses mémoire pour ladite pluralité de correctifs d'image par l'unité de génération d'adresses (AGU) (308) ;
le lancement d'une boucle de traitement multidimensionnelle en vue du traitement par le processeur (304) desdits correctifs d'image ;
durant ledit traitement, la génération dudit au moins un événement en réponse auxdites adresses mémoire ; et
durant le traitement de ladite boucle de traitement, ladite réinitialisation de l'accumulateur (36) du processeur en réponse audit au moins un événement stocké.

6. Procédé selon la revendication 5, comprenant en outre :
la spécification d'un nombre de cycles après ladite génération de l'au moins un événement ; et
ladite génération de ladite réinitialisation dudit accumulateur se produit après ledit nombre spécifié de cycles.

7. Procédé selon la revendication 5 comprenant en outre :
après ladite génération de l'au moins un événement, la spécification d'un premier nombre de cycles et d'un second nombre de cycles ; et
ladite génération de réinitialisations dudit accumulateur après lesdits premier et second nombres spécifiés de cycles.

8. Système comprenant :
un processeur (304) pour traiter des données sur une boucle multidimensionnelle à surdébit nul à l'aide d'un accumulateur (36) ;
une unité, un circuit ou un module configuré pour générer durant le traitement des données au moins un événement relatif à un emplacement dans les données ou à un point dans le traitement ;
un registre d'événements (502) configuré pour stocker ledit au moins un événement ; dans lequel des circuits logiques sont configurés pour générer un signal de réinitialisation de l'accumulateur en réponse audit au moins un événement stocké, et en réponse audit signal de réinitialisation, réinitialiser l'accumulateur (36) à zéro ou à une valeur initiale tout en évitant d'interrompre l'exécution en pipeline du processeur ;
un registre de sélection d'événements (504) ;
une porte logique ET ayant une première entrée provenant dudit registre d'événements (502), une seconde entrée provenant dudit registre de sélecteur d'événements (504) et une première sortie ET comportant une première pluralité de sorties, et
une porte OU logique exploitable pour effectuer une opération logique OU sur l'ensemble de la première pluralité de sorties, afin de produire une première sortie OU, dans lequel ledit signal de réinitialisation de l'accumulateur est généré en réponse à ladite première sortie OU.

9. Système selon la revendication 8, dans lequel le registre de sélection d'événements est configuré pour conserver un numéro d'événement codant un numéro d'AGU.

10. Système selon la revendication 8, comprenant en outre :
une unité de génération d'adresses (AGU) (308) reliée fonctionnellement au processeur ; dans lequel les événements sont générés par ladite unité de génération d'adresses (AGU).

11. Système selon la revendication 8, comprenant en outre :
une première unité de génération d'adresses et une seconde unité de génération d'adresses, chacune étant configurée pour générer des événements ;
lesdits circuits logiques étant des premiers circuits logiques configurés pour recevoir les événements générés par les première et seconde unités de génération d'adresses ;
des seconds circuits logiques configurés pour recevoir les événements générés par les première et seconde unités de génération d'adresses ;
un premier accumulateur connecté fonctionnellement auxdits premiers circuits logiques ; et
un second accumulateur connecté fonctionnellement auxdits seconds circuits logiques ; dans lequel en réponse auxdits événements, les premiers circuits logiques réinitialisent le premier accumulateur et les seconds circuits logiques réinitialisent le second accumulateur.

12. Système selon la revendication 8, comprenant en outre :
un registre à décalage (506) configuré pour stocker ladite première sortie OU ;
un registre de sélection de stade (508); dans lequel une sortie dudit registre à décalage (506) fait l'objet d'une opération logique ET avec une sortie dudit registre de sélecteur de stade (508) pour ainsi produire une seconde sortie ET,
dans lequel ladite seconde sortie ET comprend une seconde pluralité de sorties ; dans lequel ledit registre de sélection de stade spécifie un nombre de cycles après la génération de l'au moins un événement pour réinitialiser l'accumulateur (36) ;
une porte logique OU exploitable pour réaliser une opération logique OU sur l'ensemble de ladite seconde pluralité de sorties, pour ainsi produire une seconde sortie OU ; et
générer ledit signal de réinitialisation de l'accumulateur en réponse à ladite seconde sortie OU.

13. Système selon la revendication 12, dans lequel ledit registre à décalage comprend des bits qui peuvent être décalés pour permettre de conserver un historique de cycles d'instructions.

14. Système selon la revendication 12, dans lequel ledit registre de sélecteur de stade est utilisé par un logiciel dudit processeur pour spécifier au moins un nombre de cycles après qu'un événement généré par ladite AGU se produit pour générer une réinitialisation dudit accumulateur.

15. Système selon la revendication 12, dans lequel ladite seconde sortie OU est une sortie à un seul bit ; ou dans lequel ladite première sortie OU est une sortie à un seul bit.
